# EUROPÄISCHE PATENTSCHRIFT

(11) **EP 0 765 829 B1**
(45) Veröffentlichungstag und Bekanntmachung des Hinweises auf die Patenterteilung: **03.06.1998**
(21) Anmeldenummer: 96112622.4
(22) Anmeldetag: 05.08.1996
(51) Int. Cl.: B65G 53/42, B65G 53/24, B65D 88/16, B65G 65/36

(54) **Absaugvorrichtung für Schüttgutbehälter**
Suction device for bulk containers
Dispositif d'aspiration pour conteneurs pour matière en vrac

(30) Priorität: 02.10.1995 WO PCT/EP95/03890
(43) Veröffentlichungstag der Anmeldung: 02.04.1997
(73) Patentinhaber: Wilhelm, Klaus, 83022 Rosenheim (DE)
(72) Erfinder: Wilhelm, Klaus, 83022 Rosenheim (DE); Fritz, Walter, 85232 Bergkirchen (DE)
(74) Vertreter: Flach, Dieter Rolf Paul, Dipl.-Phys.

(56) Entgegenhaltungen:
- EP-A- 0 528 755
- DE-A- 2 800 853
- US-A- 3 951 462

## Beschreibung

Die Erfindung betrifft eine Absaugvorrichtung für Schüttgutbehälter, insbesondere für mit rieselfähigem Gut befüllte Gebinde nach dem Oberbegriff des Anspruches 1.

In vielen technischen Bereichen, insbesondere auch in der kunststoffverarbeitenden Industrie - aber nicht nur dort - liegen die zu verarbeitenden Ausgangsprodukte in Form von rieselfähigem Schüttgut vor. Diese werden häufig in befüllten Gebinden, sog. Oktabinbehältern angeliefert. Es sind unterschiedlichste Entleerungs- und Absaugeinrichtungen bekannt geworden, um derartige Gebinde bei automatischer Materialförderung zu entleeren. Dabei besteht häufig das Problem, daß je nach Bedarfsanfall die Gebinde zunächst nur zum Teil entleert und zwischenzeitlich wieder aufbewahrt werden müssen, bis das betreffende Schüttgut wieder zur Verarbeitung benötigt wird.

Die Entleerung derartiger Gebinde erfolgt regelmäßig unter Verwendung von Absaugeinrichtungen.

Die am häufigsten verwendete Absaugeinrichtung besteht aus einem Saugrohr, auch Sauglanze oder Saugrüssel genannt, welches bevorzugt aus zwei ineinander geschobenen Rohren besteht, die durch Abstandshalter zwischen innerem und äußerem Rohr einen Luftspalt ergeben. Über diesen Luftringspalt wird die für das pneumatische Fördern notwendige Förderluft mit angesaugt. Das Saugrohr wird üblicherweise mit einem flexiblen Förderschlauch verbunden und in das Schüttgut von oben her eingesteckt. Durch den doppelrohrförmigen Saugrüssel soll gewährleistet werden, daß jeweils eine für ein rieselfähiges Schüttgut spezifische minimale Ansaug-Fließgeschwindigkeit von beispielsweise 18m/Sekunde aufrechterhalten wird.

Neben den bekannten Verfahren, bei welchen das Saugrohr üblicherweise von oben her in das Schüttgut gesteckt wird, sind auch Verfahren bekannt geworden, bei welchen die Schüttgutgebinde mit dem Saugrohr angestochen werden.

Bei diesen Verfahren und Vorrichtungen treten aber mehrfach Probleme auf.

So ist es stets schwierig, das richtige Mischungsverhältnis zwischen Luft und Schüttgut für eine optimale pneumatische Förderung einzustellen und aufrecht zu erhalten. Insbesondere besteht die Gefahr, daß das Saugrohr und dessen Saugrohröffnung bei sinkendem Füllstand im Gebinde plötzlich auf der Oberfläche des Schüttgutes aufliegt und aufgrund von Materialmangel an der Ansaugöffnung des Saugrüssels der Förderstrom abnimmt oder unterbrochen wird.

Möglich ist ebenso, daß der Saugrüssel in Verbindung mit dem Förderschlauch kippt und nur noch Luft ansaugt, wodurch ebenfalls der Förderstrom unterbrochen wird.

Ebenso kann der Saugschlauch auch am Gebinderand hängen bleiben, so daß die Ansaugöffnung des Saugrohrs dem sinkenden Füllstand nicht mehr zu folgen vermag.

Bei zu starker Unterdruckerzeugung und in Folge dessen bei zu starkem Ansaugeffekt kann zudem das Saugrohr verstopfen.

Schließlich ist auch schon festgestellt worden, daß inbesondere bei schlecht rieselfähigem Material an der Absaugstelle im rieselfähigen Gut ein Hohlraum (Lunker) freigesaugt und auch deswegen der Fördervorgang aufgrund von Materialmangel an der Absaugstelle unterbrochen wird.

Schließlich ist es sogar möglich, daß insbesondere bei hohen Unterdrücken das Saugrohr sich auf den Grund des Gebindes durchsaugt und sich dort an einer Behälterfolie 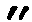 verschluckt", in welcher sich das rieselfähige Schüttgut in der Regel im Gebinde befindet.

Wenn - wie oben ausgeführt und erwähnt wurde - das Saugrohr durch die Gebindewand gestochen wird, ist zudem die Gefahr des Verstopfens des Saugrohrs noch größer. Zudem kann die Saugrohröffnung dem sinkenden Füllstand des rieselfähigen Gutes im Gebinde nicht folgen, so daß hier auch eine relativ große Restmenge im Schüttgutbehälter zurückbleibt, die anderweitig abgesaugt werden muß.

Aufgrund dieser Nachteile ist es erforderlich, daß die Gebinde durch Bedienungspersonal permanent überwacht und die Saugrüssel gegebenenfalls manuell nachgeführt werden müssen.

Um die oben erwähnten Nachteile zumindest zum Teil auszugleichen ist auch schon vorgeschlagen worden, ergänzend Klopf- und Schwing- oder Vibrationseinrichtungen vorzusehen, wie sie grundsätzlich aus der EP 0 528 755 A1 bekannt sind. Dabei soll gemäß dieser Vorveröffentlichung eine Verbesserung auch dadurch erzielt werden, daß die in Umfangsrichtung versetzt liegenden und vertikal ausgerichteten Teile des Saugkopfes Lamellen bilden (die in das Schüttgut eintauchen), an denen eine geschlossene Platte befestigt sein sollen. Dadurch soll die Vorrichtung nur gerade bis zur Oberfläche des abzusaugenden Gutes einsinken und mit zunehmender Entleerung des Gebindes nach unten absinken.

Aber auch gemäß dieser gattungsbildenden Vorrichtung lassen sich die eingangs geschilderten Nachteile nicht vermeiden. Denn wenn die erwähnte Platte zu groß dimensioniert ist, hat dies zur Folge, daß durch das Saugrohr unterhalb der Platte das abzusaugende Schüttgut abgesaugt wird und der Plattenrand neben der dadurch gebildeten Absaugmulde auf dem Schüttgut aufsitzt, so daß vom Rand her kein weiteres Schüttgut nachrieseln kann. Es kann somit zu einem "Leersaugen" im Ansaugbereich des Saugrohres kommen.

Wird die Platte aber zu klein dimensioniert, so hat insbesondere unter Einsatz des Vibrationsgerätes dies zur Folge, daß die Platte stets zwangsläufig durch die Ausbildung der Saugmulde tiefer absinkt und vom Rand des Gebindes her rieselfähiges Schüttgut auf die Oberseite der Platte fällt, wodurch sich der Saugkopf in das Schüttgut tiefer eingräbt und zunehmend mehr rieselfähiges Schüttgut auf die Oberseite der Platte nachrutscht und die gewünschte optimale Absaugung sogar verhindert.

Zudem sind auch Vibrationstische vorgeschlagen worden, auf welchen die Gebinde abgestellt werden. Bei großen Schüttgutmassen von beispielsweise mehreren Tonnen erfordert dies aber riesige Vibrationsanlagen.

Schließlich ist aus der DE- 39 26 688 eine Kippvorrichtung für auf einer Palette abgestellte Gebinde mit rieselfähigem Gut bekannt geworden, die eine Kippvorrichtung umfaßt. Zudem ist ein externer außerhalb des Gebindes vorgesehener Auslaufsammelbehälter vorgesehen, der mit einer verschließbaren Öffnung versehen ist, die mit einer an der Seitenwand benachbart zum Gebindeboden in der Wand des Gebindes einzustechenden Öffnung eingebracht wird. In gekippter Lage des Gebindes wird dann über ein mit dem ausserhalb des Gebindes vorgesehenen Auslaufsammelbehälter verbundenes Saugrohr der Absaugvorgang durchgeführt. Es handelt sich hierbei aber um eine höchst aufwendige raumgreifende und teuere Gesamtanlage, die in der Regel nur als fest installierte Einheit geeignet ist.

Aufgabe der vorliegenden Erfindung ist es, eine gegenüber herkömmlichen Lösungen deutlich einfacher und wirkungsvoller aufgebaute Absaugvorrichtung zu schaffen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Es muß also als überaus überraschend bezeichnet werden, daß mit der erfindungsgemäßen Absaugvorrichtung die Eingangs erwähnten, im Stand der Technik auftretenden Nachteile völlig überwunden werden. Dabei ist umso überraschender, daß die erfindungsgemäße Absaugvorrichtung dabei höchst einfach aufgebaut und leicht handhabbar ist, und dabei vergleichsweise klein dimensioniert sein kann.

Kern der Erfindung ist, daß die Absaugvorrichtung einen Schwimmkörper umfaßt, der auf dem rieselfähigen Schüttgut schwimmend angeordnet wird. An diesem Schwimmkörper ist die zumindest eine Absaugöffnung zumindest einer Absaugleitung angeordnet oder ausgebildet. Dieser Schwimmkörper wird lediglich von oben her bei abgenommenem Deckel des Gebindes auf das Schüttgut aufgesetzt. Diese flexible Vorrichtung ist dabei nicht an das Behältnis gebunden. Zudem muß vor allem auch das Gebinde selbst an seiner Außenwand beispielsweise durch Anstechen nicht zerstört werden (was vor allem dann Nachteile aufweist, wenn das rieselfähige Schüttgut nicht auf einmal völlig entleert, sondern zunächst an der Absaugeinrichtung ein anderes Gebinde mit anderem Inhalt angeschlossen werden soll).

Der Schwimmkörper kann dabei in einer vordefinierten Eintauchtiefe (beispielsweise zwischen einem Minimal- und einem Maximalwert) in das Schüttgut eintauchen und hält dabei die Absaugöffnung der Absaugleitung in optimaler Lage.

Mit der erfindungsgemäßen Absaugvorrichtung ist zudem eine fast restlose Entleerung von Schüttgut-Behältnissen ohne manuelles Zutun möglich. Vor allem aber kann kein Freisaugen im Bereich der Absaugöffnung (Lunker) entstehen, da der Schwimmkörper bei sinkendem Füllstand stets automatisch der Füllstandshöhe folgt.

In einer bevorzugten Ausführungsform der Erfindung ist zudem eine Rüttel- oder Vibrationseinrichtung vorgesehen. Abweichend zum Stand der Technik ist diese aber auf dem Schwimmkörper selbst vorgesehen, wirkt dabei also direkt auf das Ansaugrohr der Absaugeinrichtung. Da der Schwimmkörper selbst klein dimensioniert sein kann, d. h. eine nur vergleichsweise geringe Masse aufweist, ist auch nur ein geringer Energiebedarf zum Auflockern von schlecht rieselfähigem Material notwendig, und dies vor allem im Gegensatz zu Vibrationstischen und Rüttlern oder Klopfeinrichtungen, die die gesamte Masse des Schüttgutes stets beaufschlagen und deshalb entsprechend groß dimensioniert sein müssen.

Durch einen derartig klein dimensionierten Vibrator, Rüttler oder Klopfer entsteht zudem so gut wie kein Staub beim Auflockern, da der Schwingungserreger nur lokal und nur schwimmend wirkt.

Bei der erfindungsgemäßen Absaugeinrichtung kann problemlos auch eine Mehrfachabsaugung beispielsweise mit zwei, drei oder mehr, z. B. sogar fünf Absaugrohren vorgesehen sein. Bevorzugt sind die Absaugöffnungen der einzelnen Absaugrohre in einem eine Absaugkammer bildenden Überrohr angeordnet, um ein optimales Verhältnis zwischen anzusaugender Luft und Schüttgut zur Aufrechterhaltung eines optimalen Absaugvorganges aufrecht zu erhalten.

In einer Weiterbildung der Erfindung ist der Schwimmkörper mit einer Art Schwimmkammer versehen. Diese kann in einer Weiterbildung der Erfindung nach unten hin offen sein, so daß der Schwimmkörper zunächst von oben her bei geöffnetem Gebinde durch leichtes Eindrücken zumindest in einer Teilhöhe in das rieselfähige Gut eingesteckt werden kann.

Ergänzend oder abweichend dazu kann der Schwimmkörper aber beispielsweise auch über eine externe Trag- und/oder Führungseinrichtung zumindest annähernd in Horizontallage gehalten werden. Dies ist beispielsweise durch eine Teleskopführung möglich, welche lediglich zur Lageausrichtung, insbesondere zur Horizontalausrichtung des Schwimmkörpers dient, wobei der Schwimmkörper aufgrund des Eigengewichtes bei sinkendem Füllstand stets automatisch nachgeführt wird. Derartige Führungsausrichtungen zur Erzielung einer optimalen Ausrichtlage, insbesondere Horizontalausrichtung, sind aber nicht zwingend notwendig. Bevorzugt wird ein Schwimmkörper verwendet, der stets durch seine 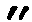 schwimmende" Lage in der gewünschten Position ausgerichtet bleibt, wodurch stets eine optimale Nachführung der zumindest einen Ansaugöffnung der Absaugrohre gewährleistet ist. Unter Umständen kann bei Bedarf aber auch eine mehrere Seile umfassende, den sogenannten 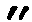 Schwimmkörper" dadurch zusätzlich stützende Führungseinrichtung vorgesehen sein, um diese optimale Positionausrichtung (in der Regel Horizontallage) beizubehalten, wobei diese Lage Hilfseinrichtungen bevorzugt, die aufgrund der Gravitationskräfte ein automatisches Nachfolgen des Schwimmkörpers in Abhängigkeit des sinkenden Füllstandes nicht behindern sollen.

Wie bereits erläutert wurde, wird das rieselfähige Schüttgut in vielen Einsatzfällen nicht unmittelbar in das beispielsweise aus Pappe bestehende Gebinde eingefüllt, sondern befindet sich in einer entsprechend groß dimensionierten im Gebinde eingebrachten Kunststoffolie. Um erfindungsgemäß eine vollständige automatische Entleerung zu gewährleisten, ist ferner eine Zugeinrichtung für die Folie vorgesehen, die bei abgenommenem Gebinde-Deckel am oberen Rand der Folie befestigt wird. Diese kann beispielsweise durch Federzüge nach oben in ausreichendem Maße mit einer Kraft entgegen der Gewichtskraft des Schüttgutes vorgespannt sein. Sobald die Gewichtskraft kleiner wird als die Federkraft, wird die Folie vom Rand her angehoben, so daß das außen befindliche Schüttgut zur Mitte hin zusammenströmt, und hier von der Absaugeinrichtung aufgenommen werden kann.

Die Erfindung wird nachfolgend anhand von Ausführungsbeispielen näher erläutert. Dabei zeigen im einzelnen
- Fig. 1:: eine schematische teilweise im Schnitt wiedergegebene Seitenansicht eines ersten Ausführungsbeispieles einer erfindungsgemäßen Absaugvorrichtung für Schüttgut;
- Fig. 2:: eine vergrößerte Detaildarstellung des in Fig. 1 gezeigten Schwimmkörpers;
- Fig. 3:: eine zu Fig. 1 leicht abgewandelte Ausführungsform in der Endphase des Absaugvorganges.

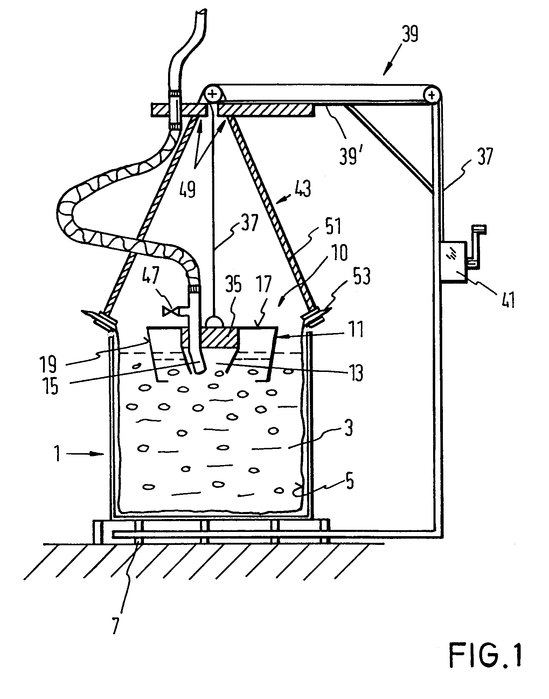

In Fig. 1 ist in schematischer vertikaler Querschnittdarstellung ein Gebinde 1 beispielsweise in Form eines sogenannten Oktabins gezeigt, welches beispielsweise aus Pappe oder Wellpappe bestehen kann, und in dessen Innerem sich rieselfähiges Schüttgut 3, beispielsweise Kunststoffgranulat befindet.

Wie aus Fig. 1 auch ersichtlich ist, ist das Gebinde 1 üblicherweise mit einer Folie 5 ausgeschlagen, die beutelförmig gestaltet ist, worin sich das Schüttgut 3 staub- und feuchtigkeitsgeschützt befindet.

Das Gebinde 1 steht z. B. bei abgenommenem Deckel auf einer Palette 7.

In Fig. 1 ist im schematischen Querschnitt ein Saugkopf 10 mit einem Schwimmkörper 11 gezeigt. In dessen Mitte befindet sich eine Absaugkammer 13.

Die Absaugkammer 13 ist bevorzugt zentrisch zum Schwimmkörper 11 angeordnet und kann nach Art eines Überrohres ausgebildet sein, in dessen Innerem sich zumindest ein Absaugrohr 15 zum Absaugen des rieselfähigen Schüttgutes 3 befindet.

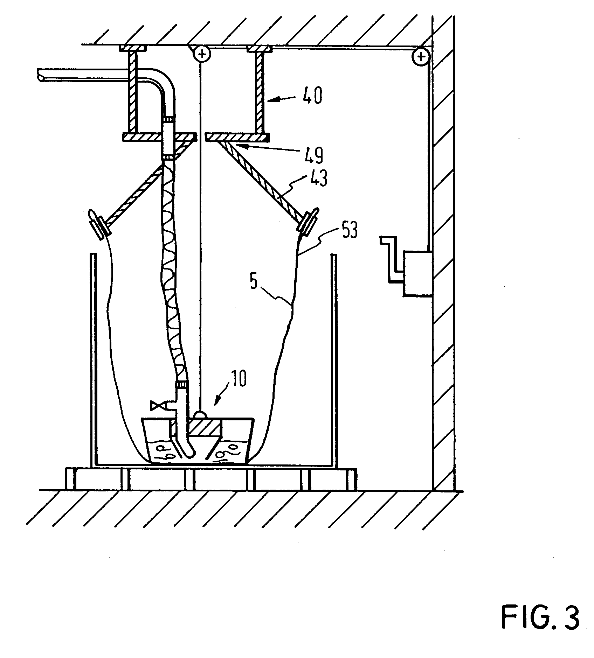

Die so gebildete Absaugeinrichtung umfaßt insbesondere gemäß der Darstellung nach Fig. 1 oder 3 eine Deck- oder Schwimmplatte 17, an welcher sich nach unten hin eine Umfangswand 19 anschließt. Die Umfangswand 19 verläuft im gezeigten Ausführungsbeispiel nach unten hin konisch verjüngt.

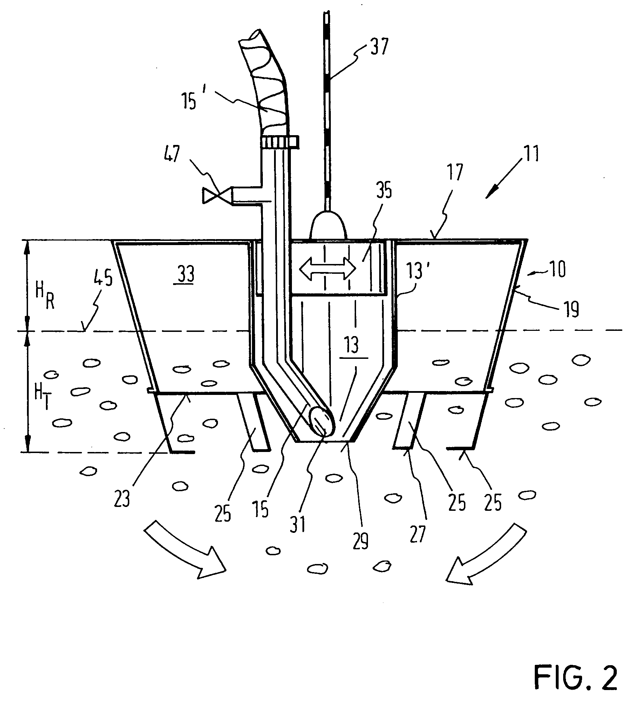

Am unteren Umfangsrand 19 sind in Umfangsrichtung versetzt liegend Füße 25 ausgebildet (Figur 2).

Durch den unteren Umfangsrand 23 wird eine Kammeröffnung 27 begrenzt.

Dazu bevorzugt zentrisch nach innen versetzt befindet sich die erwähnte Absaugkammer 13, die im gezeigten Ausführungsbeispiel zumindest in einer Teilhöhe, vorzugsweise in ihrer unteren Teilhöhe ebenfalls nach unten hin konisch verjüngt ausgebildet ist und dort eine Ansaugkammeröffnung 29 bildet. Bevorzugt im Bereich der Ansaugkammeröffnung 29 befindet sich die Ansaugöffnung 31 des zumindest einen Absaugrohres 15. Die Ansaugöffnung 31 des Absaugrohres 15, die Ansaugkammeröffnung 29 der Kammeröffnung 27, sowie die untere Begrenzung der Füße 25 befinden sich in etwa in gleicher Höhenlage. Bevorzugt können dabei die Füße 25 zumindest geringfügig unterhalb des durch die Ansaugkammeröffnung 29 bzw. Ansaugöffnung 31 des Absaugrohres 15 gebildeten Niveaus zu liegen kommen. Die Höhe der Füße beträgt bevorzugt ein Viertel bis ein Drittel der Gesamthöhe des Schwimmers. In der Regel sind nur drei Füße in Umfangsrichtung versetzt liegend angeordnet, so daß dazwischen in Höhe der Füße auch Schüttgut 3 seitlich bis zur Kammeröffnung 29 strömen kann.

Aufgrund dieses Konstruktionsprinzipes werden zwischen der Umfangswand 19 des Schwimmkörpers 11 und der Absaugkammerwand 13' eine oder mehrere Luftkammern 33 gebildet, die nach oben hin verschlossen und nur unten im Bereich ihrer Kammeröffnung 27 geöffnet ist bzw. sind.

Das Absaugrohr 15 durchdringt die Deckplatte 17. An einem nach oben überstehenden Ansatz kann ein flexibler Absaugschlauch 15' angeschlossen sein.

Ferner ist aus den Figuren 1 und 3 ersichtlich, daß am Schwimmkörper, im gezeigten Ausführungsbeispiel unterhalb der Deckplatte 17 im Bereich der Absaugkammer 13, eine Vibrationseinrichtung 35 angeordnet ist, wodurch das Absaugrohr 15 wie aber auch der Schwimmkörper insgesamt in Vibration versetzt werden kann. Da die Gesamtmasse des Schwimmkörpers relativ gering ist, wird auch eine nur gering dimensionierte Vibrationeinrichtung 35 benötigt.

Die gesamte Anordnung kann über einen Seilzug 37 aufgehängt sein. Als Aufhängeinrichtung 39 dient im gezeigten Ausführungsbeispiel eine galgenförmige Trageinrichtung, die mit einem in Figur 1 schematisch gezeigten Kurbelantrieb 41 versehen ist, worüber der gesamte Schwimmkörper 11 angehoben bzw. in Richtung des Gebindes 1 abgesenkt werden kann. Der Kurbelantrieb 41 kann auch motorisch betrieben werden.

In Fig. 1 ist ferner noch eine Zugeinrichtung 43 für die Folie 5 vorgesehen, auf die später eingegangen wird.

Nachfolgend wird die Funktionsweise erläutert.

Ein zu entleerendes Gebinde 1 wird beispielsweise auf einer Palette 7 unter das Zentrum der Aufhängeinrichtung 39 verfahren. Bei entferntem Deckel wird über den Kurbelantrieb 41 bei nachlassendem Seilzug 37 der Saugkopf 10 mit dem Schwimmkörper 11 mit der entsprechenden Absaugeinrichtung von oben her auf das rieselförmige Schüttgut 3 abgesenkt. Der gesamte Schwimmkörper 11 mit der Absaugeinrichtung wird nun durch leichtes Drehen und/oder Drücken in eine bevorzugt mittige Schwimmposition in das Schüttgut 3 gebracht, wie dies in Fig. 1 und 3 angedeutet ist. Durch das Eindrücken kann Schüttgut zumindest in einer Teilhöhe in den Raum zwischen Umfangsrand 23 und der innenliegenden Absaugkammer 13 eindringen, so daß der Schwimmkörper 11 noch in einer Resthöhe H_{R} über die Füllstandshöhe 45 nach oben hin übersteht.

Der erwähnte Seilzug 37 besteht bevorzugt aus Metall und dient so gleichzeitig auch als Erdung für die Ableitung beim Auftreten statischer Aufladung, die beim Fördern entstehen kann.

Durch die bevorzugt sich nach unten konisch verjüngende Umfangswand 19 des bevorzugt rotationssymmetrischen Schwimmkörpers wird ein Kippen bei sinkendem Füllstand im Gebinde verhindert. Insbesondere durch das Vorhandensein von Schüttgut unterhalb der im Schwimmkörper 11 gebildeten Luftkammern 33 in Umgrenzung der Absaugkammer 13 wird eine stets stabile Schwimmlage erzielt.

Durch den zugeschalteten Schwingungserreger 35 in Form eines Vibrators und/oder Klopfers kann eine einstellbare Schwingung auf den Schwimmkörper 11 und damit weiter auf das Schüttgut übertragen werden, zumindest in jenem Bereich, wo sich die Ansaugöffnung 31 des Absaugrohres 15 befindet.

Insbesondere durch die Schwingung fließt das Schüttgut 3 stets in den sich bildenden Hohlraum im Bereich der Ausgangskammeröffnung 29, in welchem sich die Ansaugöffnung 31 des zumindest einen Absaugrohres 15 befindet. Durch diese Konstruktion kann stets gewährleistet werden, daß eine günstige Mischung aus Schüttgut und Luft aufrechterhalten wird, die sowohl ein Verstopfen der Absaugöffnung des Absaugrohres zum einen aber auch ein Freisaugen zum anderen verhindert, um einen kontinuierlichen Absaugvorgang des Schüttgutes aufrecht zu erhalten.

Um eine optimale Förderluftmenge für die jeweilige Förderaufgabe einzustellen, sind im gezeigten Ausführungsbeispiel noch oberhalb des Saugkopfes 10 umd damit des Schwimmkörpers ein von außen her einstellbares Ventil 47 vorgesehen.

Der Schwingungserreger kann so getaktet und betrieben werden, daß die Eintauchtiefe H_{T} des Schwimmkörpers 11 stets zumindest in etwa gleichbleibt und damit eine absolut stabile Schwimmlage allzeit gewährleistet werden kann.

Da oberhalb des Schwimmkörpers 11 das Absaugrohr 15 in einen flexiblen Absaugsohlauch 15' übergeht, der ausreichend lang bemessen ist, wird gewährleistet, daß der Schwimmkörper bis zum Boden des Gebindes bei entsprechend fallender Füllstandshöhe absinken kann (ebenso sind aber auch teleskopartige Rohrsysteme möglich, eine Anpassung an die unterschiedliche Länge des Absaugrohrs zu ermöglichen).

Abweichend vom gezeigten Ausführungsbeispiel können anstelle des in Fig. 1 und 3 gezeigten einzigen Absaugrohres 15 beispielsweise in Umfangsrichtung versetzt liegend drei Absaugrohre vorgesehen sein, deren Ansaugöffnung 31 allesamt in dem Bereich der Ansaugkammeröffnung 29 liegen, und die von dort der konischen Kammerwand folgend in Draufsicht zunächst mit radialer Komponente und dann vertikal nach oben durch die Deckplatte 17 über den Schwimmkörper 11 hinaus geführt sind.

Während des Absenkvorganges ist der Seilzug 37 völlig entriegelt oder wird zumindest weitgehend entlastet, so daß der Schwimmkörper 11 der fallenden Füllstandshöhe folgen kann.

Sobald der Schwimmkörper 11 den Boden des Gebindes 1 erreicht hat, steht der Schwimmkörper 11 mit seinen oben erwähnten Füßen 25 auf dem Gebindeboden, ist aber noch vom Schüttgut umgeben.

Um eine möglichst vollständige Entleerung automatisch zu gewährleisten, ist ferner die oben bereits erwähnte Zugeinrichtung 43 vorgesehen, die beispielsweise mehrere in Umfangsrichtung versetzt liegende Tragseile umfaßt, die entweder über eine Federeinrichtung zusammenwirken oder selbstfedernd ausgebildet sind. Im gezeigten Ausführungsbeispiel nach Fig. 1 umfaßt die Zugeinrichtung 43 beispielsweise drei oder vier von einer Befestigungsstelle 49 an dem Horizontalträger 39' der Aufhängeinrichtung 39 verankerte Federzüge 51, die an verschiedenen Stellen in Umfangsrichtung am oberen Folienrand 53 der Folie 5 befestigt werden. Hierüber wird eine Kraft entgegen der Gewichtskraft des Schüttgutes 3 auf die Folie 5 eingeleitet.

Sobald die Gewichtskraft der verbleibenden Restmenge des Schüttgutes in der Folie 5 geringer wird als die Federkraft der Federzüge 51, wird die Folie 5 von ihrem Rand her angehoben - wie dies schematisch in Fig. 2 angedeutet ist - so daß sich das eher außen befindliche Schüttgut am Gebindeboden auch durch die Füße 25 hindurch zur Mitte hin fließt, also zum Absaughohlraum, d. h. der Ansaugkammeröffnung 29, wo es praktisch reststandslos abgesaugt werden kann.

Anhand von Fig. 2 ist ferner angedeutet, daß abweichend von dem Ausführungsbeispiel nach Fig. 1 als Aufhängeeinrichtung 39 auch eine an einer Decke befestigte Tragkonsole 40 verwendet werden kann.

Der erläuterte Schwimmkörper 11 kann vom gezeigten Ausführungsbeispiel unterschiedlich ausgebildet sein. Es können beispielsweise geschlossene Schwimmkammern vorgesehen sein. Möglich ist unter Umständen auch nur eine auf der Oberfläche des Schüttgutes aufliegende Platte oder plattenähnliche Einrichtung zu verwenden, an deren Unterseite eine oder mehrere Absaugkammeröffnungen 29 oder Doppelrohrsysteme vergleichbar herkömmlicher Ansauglanzen über die Ebene der Deckplatte 17 des so gebildeten Schwimmkörpers 11 nach unten in das Schüttgut vorragen. Um eine stets stabile Schwimmlage zu erzielen, kann insbesondere im derartigen Ausführungsbeispiel vorgesehen sein, daß anstelle eines einteiligen Seilzuges 37 beispielsweise die Deckplatte über mehrere in Umfangsrichtung versetzt angreifende Seilzugabschnitte leicht vorgespannt und gehalten wird. Dabei kann vorgesehen sein, daß gewisse Entlastungskräfte zur horizontalen Stabilisierung des so gebildeten Schwimmers vorgesehen sind, die aber auf jeden Fall geringer als das Eigengewicht des gesamten Schwimmers ist, damit dieser stets bei sinkender Füllstandshöhe des Schuttgutes auf diesem aufliegend mit absinkt.

Sofern der Schwimmer nicht allein aufgrund der Gravitationskraft einer sinkenden Füllstandshöhe des Granulats oder des Schüttgutes folgen kann, müssen entsprechende Sensoreinrichtungen vorgesehen sein, die über die Aufhängeeinrichtung eine automatische Nachführung des Schwimmers bei sinkender Füllstandshöhe erlauben.

## Patentansprüche

1. Absaugvorrichtung für Schüttgutbehälter, insbesondere für mit rieselfähigem Schüttgut (3) befüllte Gebinde (1), mit einem zu einer Saugleitung (15, 15') führenden mit einer Ansaugöffnung (31) versehenen Saugkopf, der von oben her auf das Schüttgut (3) absenkbar bzw. von oben her in das Schüttgut (3) einbringbar ist, und mit einer Schwingungsregelungseinrichtung (35), worüber der Saugkopf (10) zumindest mittelbar in Schwingung versetzt wird, **dadurch gekennzeichnet**, daß der Saugkopf (10) mit einem im oder auf dem Schüttgut (3) schwimmenden Schwimmkörper (11) versehen ist oder aus einem Schwimmkörper (11) besteht.

2. Absaugvorrichtung nach Anspruch 1, **dadurch gekennzeichnet**, daß die Schwingungsregelungseinrichtung (35) im bzw. am Schwimmkörper (11) vorgesehen ist.

3. Absaugvorrichtung nach Anspruch 1 oder 2, **dadurch gekennzeichnet**, daß der Schwimmkörper (11) zumindest eine Luftkammer (13, 33) umfaßt.

4. Absaugvorrichtung nach Anspruch 3, **dadurch gekennzeichnet**, daß der Schwimmkörper (11) nach oben über eine Deckplatte (17) und in Umfangsrichtung durch eine Umfangswand (19) verschlossen und gegebenenfalls lediglich an seiner Unterseite mit einer Kammeröffnung (27) versehen ist.

5. Absaugvorrichtung nach einem der Ansprüche 1 bis 4, **dadurch gekennzeichnet**, daß im Inneren des Schwimmkörpers (11), vorzugsweise im Zentrum des Schwimmkörpers (11) eine nach unten hin offene und mit einer Absaugkammeröffnung (29) versehene Absaugkammer (13) vorgesehen ist, wobei im Bereich der Absaugkammeröffnung (29) die zumindest eine Ansaugöffnung (31) einer Absaugleitung (15) liegt.

6. Absaugvorrichtung nach einem der Ansprüche 1 bis 5, **dadurch gekennzeichnet**, daß die Absaugkammer (13) zumindest in einer Teilhöhe, vorzugsweise in ihrem unteren benachbart zur Absaugkammeröffnung (29) liegenden Ende nach unten hin vorzugsweise konisch verjüngt ist.

7. Absaugvorrichtung nach einem der Ansprüche 1 bis 6, **dadurch gekennzeichnet**, daß der Schwingungserreger (35) am, auf oder im Saugkopf vorgesehen ist, vorzugsweise im Inneren der Absaugkammer (13) oberhalb der Absaugkammeröffnung (29).

8. Absaugvorrichtung nach einem der Ansprüche 1 bis 7, **dadurch gekennzeichnet**, daß die Umfangswände (19) des Schwimmkörpers (11) nach unten hin zumindest teilweise konisch verjüngt aufeinander zu laufen.

9. Absaugvorrichtung nach einem der Ansprüche 1 bis 8, **dadurch gekennzeichnet**, daß am Schwimmkörper (11) an dessen Unterseite Anschläge oder Füße (25) ausgebildet sind.

10. Absaugvorrichtung nach einem der Ansprüche 1 bis 9, **dadurch gekennzeichnet**, daß die Ansaugöffnung (31) des zumindest einen Absaugrohres (15) in Höhe des untenliegenden Begrenzungsrandes oder der dort ausgebildeten Füße (25) des Schwimmkörpers (11) oder zumindest geringfügig darüber liegen.

11. Absaugvorrichtung nach einem der Ansprüche 1 bis 10, **dadurch gekennzeichnet**, daß der Schwimmkörper (11) über eine externe Führungseinrichtung in Horizontallage gehalten oder stabilisiert ist.

12. Absaugvorrichtung nach Anspruch 11, **dadurch gekennzeichnet**, daß die Führungseinrichtung aus einer oder mehreren Teleskopführungseinrichtung besteht.

13. Absaugvorrichtung nach Anspruch 11, **dadurch gekennzeichnet**, daß die Führungseinrichtung aus einer an mehreren Angriffspunkten am Schwimmkörper (11) angreifenden Aufhängeinrichtung, vorzugsweise in Form von Seilen oder Ketten besteht.

14. Absaugvorrichtung nach einem der Ansprüche 1 bis 13, **dadurch gekennzeichnet**, daß der Schwimmkörper (11) zumindest über eine vorzugsweise seilzugähnliche Hubeinrichtung anheb- und absenkbar ist.

15. Absaugvorrichtung nach einem der Ansprüche 1 bis 14, **dadurch gekennzeichnet**, daß ferner eine Zugeinrichtung (43) für eine das Schüttgut (3) in einem Gebinde (1) aufnehmenden Folie (5) vorgesehen ist, die am Folienrand (53) befestigbar ist, worüber bei geringerer Gewichtskraft der Restmenge des Schüttgutes (3) als der Federkraft der Zugeinrichtung (43) die Folie (5) vom Rand des Gebindes (1) her unter Sammlung der Restmenge des Schüttgutes (3) zur Mitte der Folie (5) bewegbar ist.

## Claims

1. An extraction apparatus for bulk material containers, in particular for bins (1) filled with a pourable bulk material (3), having a suction head which leads to a suction line (15, 15'), is provided with an intake opening (31) and can be lowered from above onto the bulk material (3) or can be introduced from above into the bulk material (3), and having an oscillation control device (35), whereby the suction head (10) can be caused at least indirectly to oscillate, wherein the suction head (10) is provided with a float (11) floating in or on the bulk material (3) or consists of a float (11)

2. The extraction apparatus as claimed in claim 1, wherein the oscillation control device (35) is provided in or on the float (11).

3. The extraction apparatus as claimed in claim 1 or 2, wherein the float (11) comprises at least one air chamber (13, 33).

4. The extraction apparatus as claimed in claim 3, wherein the float (11) is closed at the top by means of a covering plate (17) and in the circumferential direction by a circumferential wall (19) and, if appropriate, is provided with a chamber opening (27) only on its underside.

5. The extraction apparatus as claimed in any of claims 1 to 4, wherein an extraction chamber (13) which is open toward the bottom and is provided with an extraction chamber opening (29) is provided inside the float (11), preferably in the center of the float (11), the at least one intake opening (31) of an extraction line (15) being located in the region of the extraction chamber opening (29).

6. The extraction apparatus as claimed in any of claims 1 to 5, wherein the extraction chamber (13) is tapered, preferably conically, toward the bottom at least in a partial height, preferably in its lower end located adjacent to the extraction chamber opening (29).

7. The extraction apparatus as claimed in any of claims 1 to 6, wherein the oscillation generator (35) is provided on, on top of or in the suction head, preferably inside the suction chamber (13) above the suction chamber opening (29).

8. The extraction apparatus as claimed in any of claims 1 to 7, wherein the circumferential walls (19) of the float (11) extend toward one another at least partially conically tapered toward the bottom.

9. The extraction apparatus as claimed in any of claims 1 to 8, wherein stops or feet (25) are formed on the underside of the float (11).

10. The extraction apparatus as claimed in any of claims 1 to 9, wherein the intake opening (31) of the at least one extraction tube (15) is located at the level of the bottom boundary edge or the feet (25), formed there, of the float (11) or at least slightly above that level.

11. The extraction apparatus as claimed in any of claims 1 to 10, wherein the float (11) is held or stabilized in a horizontal position by means of an external guide device.

12. The extraction apparatus as claimed in claim 11, wherein the guide device comprises one or more telescopic guide device [sic].

13. The extraction apparatus as claimed in claim 11, wherein the guide device comprises a suspension device, preferably in the form of ropes or chains, which engages on the float (11) at a plurality of engagement points.

14. The extraction apparatus as claimed in any of claims 1 to 13, wherein the float (11) can be raised and lowered at least by means of a lifting device preferably like a Boden control.

15. The extraction apparatus as claimed in any of claims 1 to 14, wherein furthermore a tension device (43) is provided for a film (5), which receives the bulk material (3) in a bin (1), and can be attached to the edge (53) of the film, by means of which, when the weight of the residual quantity of the bulk material (3) is less than the spring force of the tension device (43), the film (5) can be moved from the edge of the bin (1) to the middle of the film (5) whilst collecting the residual quantity of the bulk material (3).

## Revendications

1. Dispositif d'aspiration pour conteneurs pour matière en vrac, en particulier pour des récipients (1) remplis avec une matière en vrac susceptible de s'écouler (3), comportant une tête d'aspiration menant à une conduite d'aspiration (15, 15') et pourvue d'un orifice d'aspiration (31), laquelle est susceptible d'être abaissée depuis le haut sur la matière en vrac (3) ou bien d'être introduite depuis le haut dans la matière en vrac (3), et comportant un dispositif régulateur oscillant (35), via lequel la tête d'aspiration (10) est mise en oscillation du moins indirectement, caractérisé en ce que la tête d'aspiration (10) est pourvue d'un corps flottant (11) qui flotte dans ou sur la matière en vrac (3), ou en ce qu'elle est constituée par un corps flottant (11).

2. Dispositif d'aspiration selon la revendication 1, caractérisé en ce que le dispositif régulateur oscillant (35) est prévu dans ou sur le corps flottant (11).

3. Dispositif d'aspiration selon l'une ou l'autre des revendications 1 et 2, caractérisé en ce que le corps flottant (11) comporte au moins une chambre à air (13, 33).

4. Dispositif d'aspiration selon la revendication 3, caractérisé en ce que le corps flottant (11) est refermé vers le haut par une plaque de couverture (17) et en direction périphérique par une paroi périphérique (19), et en ce qu'il est pourvu le cas échéant uniquement sur sa face inférieure d'un orifice de chambre (27).

5. Dispositif d'aspiration selon l'une quelconque des revendications 1 à 4, caractérisé en ce qu'il est prévu, à l'intérieur du corps flottant (11) et de préférence au centre du corps flottant (11), une chambre d'aspiration (13) ouverte vers le bas et pourvue d'un orifice d'aspiration (29), ledit au moins un orifice d'aspiration (31) d'une conduite d'aspiration (15) se trouvant dans la région de l'orifice d'aspiration (29) de la chambre.

6. Dispositif d'aspiration selon l'une quelconque des revendications 1 à 5, caractérisé en ce que la chambre d'aspiration (13) va en se rétrécissant vers le bas de préférence sous forme conique du moins à une hauteur partielle, de préférence à son extrémité inférieure voisine de l'orifice (29) de la chambre d'aspiration.

7. Dispositif d'aspiration selon l'une quelconque des revendications 1 à 6, caractérisé en ce que le générateur d'oscillations (35) est prévu au niveau de, sur ou dans la tête d'aspiration, de préférence à l'intérieur de la chambre d'aspiration (13) au-dessus de l'orifice (29) de la chambre d'aspiration.

8. Dispositif d'aspiration selon l'une quelconque des revendications 1 à 7, caractérisé en ce que les parois périphériques (19) du corps flottant (11) convergent vers le bas du moins partiellement avec rétrécissement conique.

9. Dispositif d'aspiration selon l'une quelconque des revendications 1 à 8, caractérisé en ce que des éléments de butée ou des pieds (25) sont réalisés sur le corps flottant (11) sur sa face inférieure.

10. Dispositif d'aspiration selon l'une quelconque des revendications 1 à 9, caractérisé en ce que l'orifice d'aspiration (31) dudit au moins un tube d'aspiration (15) se trouve à la hauteur du bord de délimitation inférieur ou des pieds (25) du corps flottant (11) qui y sont réalisés, ou du moins légèrement au-dessus.

11. Dispositif d'aspiration selon l'une quelconque des revendications 1 à 10, caractérisé en ce que le corps flottant (11) est maintenu ou stabilisé dans une position horizontale via un dispositif de guidage externe.

12. Dispositif d'aspiration selon la revendication 11, caractérisé en ce que le dispositif de guidage est constitué d'un ou plusieurs dispositifs de guidage télescopiques.

13. Dispositif d'aspiration selon la revendication 11, caractérisé en ce que le dispositif de guidage est constitué d'un dispositif de suspension, de préférence sous forme de câbles ou de chaînes, qui attaquent plusieurs points d'attaque sur le corps flottant (11).

14. Dispositif d'aspiration selon l'une quelconque des revendications 1 à 13, caractérisé en ce que le corps flottant (11) est susceptible d'être soulevé et abaissé du moins via un dispositif de soulèvement, de préférence similaire à une commande par câble.

15. Dispositif d'aspiration selon l'une quelconque des revendications 1 à 14, caractérisé en ce qu'il est prévu en outre un dispositif de traction (43) pour un film (5) recevant la matière en vrac (3) dans un récipient (1), ledit film pouvant être fixé à son bord (53), et au moyen de ce dispositif de traction le film (5) est mobile depuis le bord du récipient (1) en rassemblant le résidu de la matière en vrac (3) vers le milieu du film (5), lorsque le poids du résidu de la matière en vrac (3) est inférieur à la force élastique du dispositif de traction (43).
